# EUROPEAN PATENT SPECIFICATION

(11) **EP 2 813 279 B1**
(45) Date of publication and mention of the grant of the patent: **22.07.2020**
(21) Application number: 13746403.8
(22) Date of filing: 06.02.2013
(51) Int. Cl.: B01D 69/00, B01D 53/22, B01D 69/12

(54) **SELECTIVELY CO2-PERMEABLE MEMBRANE, METHOD FOR SEPARATING CO2 FROM MIXED GAS, AND MEMBRANE SEPARATION EQUIPMENT**
SELEKTIV CO2-DURCHLÄSSIGE MEMBRAN, VERFAHREN ZUR ABSCHEIDUNG VON CO2 AUS GASMISCHUNGEN UND MEMBRANTRENNVORRICHTUNG
MEMBRANE SÉLECTIVEMENT PERMÉABLE AU CO2, PROCÉDÉ DE SÉPARATION DE CO2 D'UN GAZ MIXTE, ET ÉQUIPEMENT DE SÉPARATION PAR MEMBRANE

(30) Priority: 06.02.2012 JP 2012023403
(43) Date of publication of application: 17.12.2014
(73) Proprietor: Renaissance Energy Research Corporation, Fushimi-ku Kyoto-shi Kyoto 612-8374 (JP); National University Corporation Kobe University, Kobe-shi, Hyogo 657-8501 (JP)
(72) Inventor: OKADA, Osamu, Kyoto-shi Kyoto 612-8374 (JP); HANAI ,Nobuaki, Kyoto-shi Kyoto 612-8374 (JP); KAMIO, Eiji, Kobe-shi Hyogo 657-8501 (JP); KASAHARA, Shohei, Kobe-shi Hyogo 657-8501 (JP); MATSUYAMA, Hideto, Kobe-shi Hyogo 657-8501 (JP)
(74) Representative: Hoffmann Eitle
(86) International application number: PCT/JP2013/052743
(87) International publication number: WO 2013/118776

(56) References cited:
- DE-A1-102009 026 869
- JP-A- 2008 036 464
- JP-A- 2010 163 561
- JP-A- 2010 214 324
- US-A- 4 318 714
- US-A- 4 761 164
- US-A- 5 749 941
- US-A1- 2005 129 598
- BRETT F. GOODRICH ET AL: "Effect of Water and Temperature on Absorption of CO 2 by Amine-Functionalized Anion-Tethered Ionic Liquids", THE JOURNAL OF PHYSICAL CHEMISTRY B, vol. 115, no. 29, 28 July 2011 (2011-07-28), pages 9140-9150, XP055123249, ISSN: 1520-6106, DOI: 10.1021/jp2015534
- JIANMIN ZHANG ET AL: "Supported Absorption of CO2 by Tetrabutylphosphonium Amino Acid Ionic Liquids", CHEMISTRY - A EUROPEAN JOURNAL, vol. 12, no. 15, 15 May 2006 (2006-05-15), pages 4021-4026, XP055045222, ISSN: 0947-6539, DOI: 10.1002/chem.200501015
- BARA, J. E. ET AL.: 'Guide to C02 Separations in Imidazolium-Based Room-Temperature Ionic Liquids' INDUSTRIAL AND ENGINEERING CHEMISTRY RESEARCH vol. 48, no. 6, 11 February 2009, pages 2739 - 2751, XP055160228
- SHIFLETT, M. B. ET AL.: 'Carbon Dioxide Capture Using Ionic Liquid 1-Butyl-3-methylimidazolium Acetate' ENERGY FUELS vol. 24, no. 10, 07 September 2010, pages 5781 - 5789, XP055160230

## Description

### Technical Field

The present invention relates to a CO₂ permselective membrane, a method of separating CO₂ from mixture gases, and a membrane separation apparatus.

### Background Art

As CO₂ permselective membranes which can be used to separate CO₂ from mixture gases by selectively permeating CO₂, various polymeric membranes have been developed (for example, Non-Patent Literature 1). However, polymeric membranes generally physically permeate CO₂ based on solution diffusion mechanism, and thus, there is a limitation of the improvements in CO₂ permeability and CO₂ to N₂ selectivity (CO₂/N₂ selectivity).

Therefore, permeable membranes, referred to as facilitated transportation membrane, which selectively permeate gases by, in addition to solution diffusion mechanism, facilitated transportation mechanism using substances referred to as "carrier" selectively reacting with CO₂ have been investigated (for example, Non-Patent Literatures 2, 3). Facilitated transportation mechanism selectively permeates certain gases based on the reversible chemical reaction between certain gases and carriers in membrane. Furthermore, recently, permeable membranes using ionic liquids have been proposed as membranes intended for facilitated transportation mechanism (Non-Patent Literatures 4, 5).

### Citation List

### Patent Literature

[Patent Literature 1] Japanese Patent Application Laid-Open No. 2010-214324

Furthermore US4761164A describes a process for separating one or more components of a gas mixture.

### Non Patent Literature

[Non-Patent Literature 1] J. Membr. Sci., 2008, 320, 390-400
[Non-Patent Literature 2] Ind. Eng. Chem. Res., 2000, 39, 2447
[Non-Patent Literature 3] J. Membr. Sci., 2007, 291, 157
[Non-Patent Literature 4] J. Membr. Sci., 2008, 314, 1
[Non-Patent Literature 5] J. Membr. Sci., 2008, 322, 28
[Non-Patent Literature 6] J. Am. Chem. Soc. Communications, 2005, 127, 2398-2399
[Non-Patent Literature 7] J. Chem. Eng. Data., 2011, 56, 3157-3162

### Summary of Invention

### Technical Problem

According to conventional facilitated transportation membranes, although fairly good CO₂ permeance and CO₂/N₂ selectivity can be accomplished, it is still not necessarily sufficient and there have been a room for improvements. Furthermore, it is frequent to essentially need the presence of water in order to exert facilitated transportation mechanism, and thus, there have been a problem that permeation performance is susceptible to the influence of relative humidity and their applications are limited. For example, Patent Literature 1 discloses a carbon dioxide gas permselective membrane including an ionic liquid; however, in its paragraph 0057, from the view point of membrane performance, it is mentioned that the relative humidity of supply gases is preferably not less than 50% and not more than 100%.

On the other hand, with respect to the water content in imidazolium based amino acid ionic liquid which is one of the configurations of gas permeable membranes, in line 11 and beyond of REFERENCE (8) in the right column on p. 2399 of Non-Patent Literature 6, it is stated that the water content of produced amino acid ionic liquids after vacuum dried for 2 days at 80°C is not more than 0.2% and the water content after producing salts is 0.4%. In Table 1 on p.3158 of Non-Patent Literature 7, it is indicated that the water content in amino acid ionic liquids is an extremely low value in the level of 200 ppm.

The main object of the present invention is to provide CO₂ selective separation membrane capable of accomplishing sufficiently high CO₂ permeance and CO₂/N₂ selectivity.

### Solution to Problem

The present invention is, in CO₂ permselective membrane having an amino acid ionic liquid and a porous membrane impregnated with the amino acid ionic liquid, as a result of diligent investigation, to accomplish sufficiently high CO₂ permeance and CO₂/N₂ selectivity by setting the water content in the amino acid ionic liquid in a suitable range.

According to the above CO₂ permselective membrane in accordance with the present invention, it is possible to accomplish a sufficiently high CO₂ permeance and CO₂/N₂ selectivity by regulating such that the water content in the amino acid ionic liquid preferably become 3-50 mass %, more preferably 5-20 mass %. It is believed that amino acid ions constituting the amino acid ionic liquid reversibly react with CO₂ to function as carriers of CO₂, contributing high CO₂ permeance and selectivity. As revealed by the present inventors in experimental results described below, the function of these amino acid ions are sufficiently exerted on both of dry conditions and high humidity environment.

The present invention also relates to a method of separating CO₂ from mixture gas, comprising a step of separating CO₂ from mixture gas by passing CO₂ in mixture gas containing CO₂ through the above CO₂ permselective membrane. According to this method, it is possible to efficiently separate CO₂ under both of dry conditions and high humidity environment. Therefore, when a portion with low humidity conditions, specifically, the conditions in which the relative humidity of the mixture gas is not more than 30% or the water vapor concentration of the mixture gas is not more than 30 mol% is contained, a method in accordance with the present invention is particularly useful.

CO₂ in the mixed gas may be allowed to permeate the CO₂ permselective membrane, while keeping the CO₂ permselective membrane and the mixed gas at a temperature of 60°C or below, when the number of the tertiary amino groups contained in the amino acid ionic liquid is larger than the total number of the primary amino groups and the secondary amino groups contained in the amino acid ionic liquid. CO₂ in the mixed gas may be allowed to permeate the CO₂ permselective membrane, while keeping the CO₂ permselective membrane and the mixed gas at a temperature above 60°C, when the total number of the primary amino groups and the secondary amino groups contained in the amino acid ionic liquid is larger than or equal to the number of the tertiary amino groups contained in the amino acid ionic liquid.

In this way, further excellent CO₂ permeance or CO₂/N₂ selectivity can be obtained by controlling the temperature of the separating step, focusing on whether the amino group in the amino acid ionic liquid is mainly a primary amino group, a secondary amino group or a tertiary amino group. From a similar viewpoint, the CO₂ in the mixed gas may be allowed to permeate the CO₂ permselective membrane, while keeping the CO₂ permselective membrane and the mixed gas at a temperature above 60°C and below 80°C, when the total number of the primary amino groups and the secondary amino groups contained in the amino acid ionic liquid is larger than or equal to the number of the tertiary amino groups contained in the amino acid ionic liquid and the number of the secondary amino groups contained in the amino acid ionic liquid is larger than the number of the primary amino groups contained in the amino acid ionic liquid.

### Advantageous Effects of Invention

According to the present invention, a CO₂ selective separation membrane capable of accomplishing a sufficiently high CO₂ permeance and CO₂/N₂ selectivity is provided.

### Brief Description of Drawings

FIG. 1 is a schematic view showing an embodiment of a membrane separation apparatus;
FIG. 2 is a graph showing a relationship between the permeation properties of CO₂ permselective membrane and CO₂ partial pressure;
FIG. 3 is a graph showing a relationship between the permeation properties of the CO₂ permselective membrane and relative humidity; and
FIG. 4 is a graph showing a relationship between the permeation properties of the CO₂ permselective membrane and the water content of the amino acid ionic liquid.
FIG. 5 is a graph showing a relationship between the permeation properties of the CO₂ permselective membrane and the temperature.

### Description of Embodiments

Hereinafter, preferred embodiments of the present invention are described in detail. However, the present invention is not limited to the following embodiments.

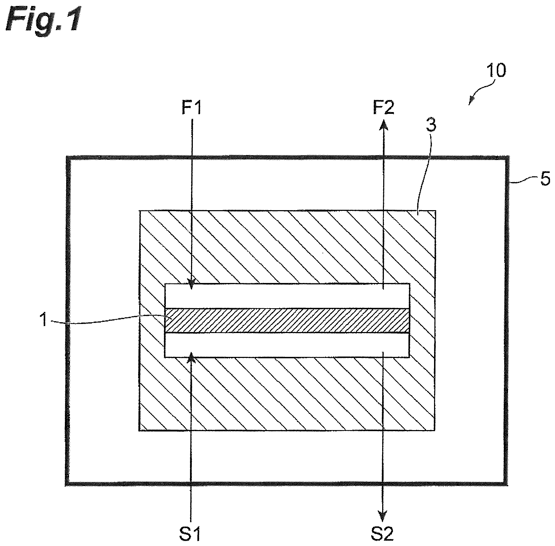

FIG. 1 is a schematic view showing an embodiment of a membrane separation apparatus having CO₂ permselective membrane. A membrane separation apparatus 10 shown in FIG. 1 is composed essentially of CO₂ permselective membrane 1, permeation cell 3 containing CO₂ permselective membrane 1, and heating unit 5 heating the CO₂ permselective membrane 1.

In the interior of the permeation cell 3, a space to which CO₂ permselective membrane 1 is mounted is provided, and this space is divided into a feed-side portion and a sweep-side portion by CO₂ permselective membrane 1. A feed gas (mixture gas) F1 containing CO₂ is supplied to the feed-side portion, and expelled as feed gas F2. To the sweep-side portion, sweep gas S1 is usually supplied. The sweep gas S1 is generally inert gas such as helium gases. CO₂ gas which has been selectively permeated the CO₂ permselective membrane 1 and moved to the sweep-side portion is expelled as expel gas S2 together with the sweep gas. As a result, CO₂ is separated from the feed gas F1.

The CO₂ selective separation membrane 1 has an amino acid ionic liquid and a porous membrane impregnated with the amino acid ionic liquid.

The amino acid ionic liquid is an ionic liquid containing one or not less than two salts composed of amino acid ions and their counter ions and a small amount of water. The amino acid ions may be anions or cations but are preferably anions in terms of permeation performance. The amino acid ions and counter ions are arbitrarily selected in a combination forming an ionic liquid, respectively.

The amino acid ionic liquid contains 3-50 mass % of, more preferably 5-20 mass % of water. This water content is a proportion on the basis of the mass of the entire amino acid ionic liquid. The amount of the water contained in the amino acid ionic liquid can be adjusted by an evaporating operation in preparing the amino acid ionic liquid or can be adjusted by adding any amount of water to the prepared amino acid ionic liquid.

The amino acid used as amino acid ions is any compound having: one or two or more kinds of an amino group selected from a primary amino group (-NH2), a secondary amino group (-NH-) and a tertiary amino group (-N=); and a carboxyl group, and may be natural or non-natural.

The amino acid ions are, for example, ions formed of at least one amino acid selected from the group consisting of arginine, histidine, lysine, aspartic acid, glutamic acid, serine, threonine, asparagine, glutamine, cysteine, glycine, proline, alanine, isoleucine, leucine, methionine, phenylalanine, tryptophan, tyrosine and valine. Part of or all of hydrogen atoms that these amino acids have may be substituted by a alkyl group or aryl group. For example, N-alkylamino acids and N-Arylamino acids having a secondary amino group, N, N-dialkylamino acids and N-Alkyl-N-Aryl amino acids can be employed.

Counter cations to be combined with amino acid anions are not essentially limited as long as being those forming ionic liquids with amino acid ions. These counter cations are, for example, at least one selected form the group consisting of imidazolium represented by formula (1), phosphonium represented by formula (2), ammonium represented by formula (3), pyridinium represented by formula (4), pyrrolidinium that may have a substituent (for example, an alkyl group), morpholinium that may have a substituent (for example, an alkyl group, an alkoxyalkyl groups) and guanidium that may have a substituent.

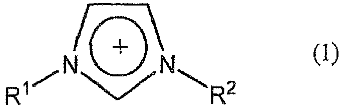

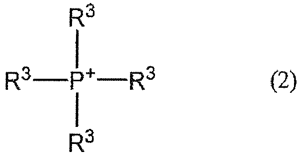

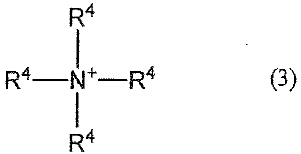

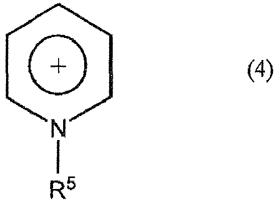

In formula (1), R¹ and R² each independently represent an alkyl group (preferably, an alkyl group of carbon number 1-10) which may have a substituent. Examples of this alkyl group include ethyl, butyl or hexyl. It is preferable that one of R¹ and R² is methyl. Specific examples of imidazolium include 1-ethyl-3-methylimidazolium, 1-butyl-3-methylimidazolium, and 1-hexyl-3-methylimidazolium.

In formula (2), R³ represents an alkyl group (preferably, an alkyl group of carbon number 1-10) that may have a substituent, and a plurality of R³ in the identical molecule may be the same or different and may be coupled with one another to form a ring. This alkyl group is, for example, butyl or hexyl. R³ may be an alkyl group substituted by, for example, an amino group. Specific examples of phosphonium include tetrabutylphosphonium, tetrahexylphosphonium, tributyl (hexyl) phosphonium and aminopropyltributylphosphonium.

In formula (3), R⁴ reprents an alkyl group (preferably, an alkyl group of carbon number 1-10) that may have a substituent, and a plurality of R⁴ in the identical molecule may be the same or different and may be coupled with one another to form a ring. This alkyl group is, for example, butyl or hexyl. Specific examples of ammonium include tetrabutylammonium, tetrahexylammonium and tributyl (hexyl) ammonium.

In formula (4), R⁵ represents an alkyl group (preferably, an alkyl group of carbon number 1-10) that may have a substituent. This alkyl group is, for example, butyl or hexyl. Specific examples of pyridinium include 1-butylpyridinium and 1-hexylpyridinium.

The porous membrane can be appropriately selected from those that are generally used as supporting membranes for permselective membranes. The porous membrane may be hydrophilic or hydrophobic, but, in the case where amino acid ionic liquid is hydrophilic, is preferably hydrophilic. The porous membrane includes, for example, polytetrafluoroethylene. The thickness of the porous membrane is not particularly limited but is, for example, 10-100 µm. It is preferable that pores in the porous membrane are sufficiently filled with the amino acid ionic liquid; however they may be partially non-filled. The porous membrane may be, if needed, impregnated with, in addition to an amino acid ionic liquid, materials except amino acid ionic liquids. The types and amounts of these additional materials can be arbitrarily selected within the range not departing from the spirit of the present invention.

A CO₂ permselective membrane 1 can be manufactured by a method including a step of impregnating a porous membrane with an amino acid ionic liquid. It is possible to conduct the impregnation with a method generally used in the art.

When separating CO₂ from the feed gas F1 using a membrane separation apparatus 10, The temperature of the feed gas (mixed gas) passing through the membrane separation apparatus 10 and the CO₂ permselective membrane 1 is generally 10-150°C, and may be 80-110°C. The CO₂ permselective membrane 1 is heated if necessary. As a heating unit 5, for example, an oven capable of containing the permeation cell 3 is used.

The temperature of the CO₂ permselective membrane 1 and the mixed gas F1 may be set as described below, taking into consideration the type of the amino group in the amino acid contained in the amino acid ionic liquid constituting the CO₂ permselective membrane 1.

CO₂ may be separated from the mixed gas, for example, by employing a CO₂ permselective membrane containing an amino acid ionic liquid containing an amino acid having a tertiary amino group as a main component, while keeping the CO₂ permselective membrane and the mixed gas at a temperature of 60°C or below. In this case, the lower limit of the temperature of the CO₂ permselective membrane and the mixed gas is not particularly limited but is, for example, 10°C. By employing the amino acid ionic liquid containing the amino acid having the tertiary amino group as a main component, still more satisfactory CO₂ permeance and CO₂/N₂ selectivity can be attained even at a low temperature of 60°C or below.

The amino acid ionic liquid containing an amino acid having a tertiary amino group as a main component is, for example, that in which the number of the tertiary amino groups is larger than the total number of the primary amino groups and the secondary amino groups. Alternatively, as the amino acid ionic liquid containing an amino acid having a tertiary amino group as a main component, that containing an amino acid having a tertiary amino group only at 50 mol% or more, 60 mol% or more, 70 mol% or more, 80 mol% or more or 90 mol% or more of all the amino acids may be employed.

CO₂ may also be separated from the mixed gas by employing a CO₂ permselective membrane containing an ionic liquid containing an amino acid having a primary amino group or secondary amino group as a main component, while keeping the CO₂ permselective membrane and the mixed gas at a temperature above 60°C. In this case, the upper limit of the temperature of the CO₂ permselective membrane and the mixed gas is not particularly limited but is, for example, 200°C. By employing the amino acid ionic liquid containing an amino acid having a primary amino group or secondary amino group as a main component at a high temperature above 60°C, further excellent CO₂ permeance and CO₂/N₂ selectivity can be attained.

The amino acid ionic liquid containing an amino acid having a primary amino group or secondary amino group as a main component is, for example, that in which the total number of the primary amino groups and secondary amino groups is larger than the number of tertiary amino groups. Alternatively, as the ionic liquid containing an amino acid having a primary amino group or secondary amino group as a main component, an amino acid ionic liquid containing an amino acid having at least one of a primary amino group and secondary amino group only at 50 mol% or more, 60 mol% or more, 70 mol% or more, 80 mol% or more or 90 mol% or more of all the amino acids may be employed.

CO₂ may also be separated from the mixed gas by employing a CO₂ permselective membrane containing an amino acid ionic liquid containing an amino acid having a secondary amino group as a main component, while keeping the CO₂ permselective membrane and the mixed gas at a temperature above 60°C and below 80°C. By employing the amino acid ionic liquid containing an amino acid having a secondary amino group as a main component at a temperature above 60°C and below 80°C, still more excellent CO₂ permeance can be attained, while suppressing energy consumption for heating.

The amino acid ionic liquid containing an amino acid having a secondary amino group as a main component is, for example, that in which the total number of the primary amino groups and secondary amino groups is larger than the number of the tertiary amino groups and the number of the secondary amino groups is larger than the number of the primary amino groups. Alternatively, as the ionic liquid containing an amino acid having a secondary amino group as a main component, an amino acid ionic liquid containing an amino acid having a secondary amino group only at 50 mol% or more, 60 mol% or more, 70 mol% or more, 80 mol% or more or 90 mol% or more of all the amino acids may be employed.

Comparison of the numbers (mole numbers) of various amino groups in the amino acid ionic liquid as described above is usually performed based on the number of the amino groups in all the amino acids constituting the amino acid ionic liquid. That is, when a small amount of amine compounds other than the amino acids having an amino group are contained in the amino acid ionic liquid, the number of the amino groups of those amine compounds can be usually ignored.

The CO₂ permselective membrane containing the amino acid ionic liquid containing an amino acid having a tertiary amino group as a main component may be combined with the CO₂ permselective membrane containing the ionic liquid containing an amino acid having a primary amino group or secondary amino group as a main component or the CO₂ permselective membrane containing the amino acid ionic liquid containing an amino acid having a secondary amino group as a main component, as necessary. In this case, the temperature of each of the CO₂ permselective membranes can be set at the temperature ranges described above, respectively.

It is frequent that the feed gas F1 contains N₂ in addition to CO₂. According to a CO₂ permselective membrane in accordance with the present embodiment, even in a case where CO₂ partial pressure is low, a high CO₂ permeance and CO₂/N₂ selectivity is maintained. Therefore, when separating CO₂ from a mixture gas in which CO₂ partial pressure is not very high, a CO₂ permselective membrane in accordance with the present embodiment is particularly useful. Generally, there is a tendency that, as the feed gas flows toward downstream, CO₂ partial pressure in the feed gas decreases. Therefore, practically, in most cases, it is expected that a step of separating CO₂ from a mixture gas with a low CO₂ partial pressure is included. Specifically, the CO₂ partial pressure of the feed gas (mixture gas) F1 may be not more than 15 kPa.

Furthermore, according to CO₂ permselective membrane in accordance with the present embodiment, it is possible to accomplish a sufficiently high CO₂ permeance and CO₂/N₂ selectivity. Generally, in a facilitated transportation membrane, when separating CO₂ gas from mixture gas with low humidity, it is mostly required to add water vapor to the mixture gas; however, according to the present embodiment, it is possible to efficiently separate CO₂ without adding water vapor. Due to requiring a tremendous energy for the supply of water vapor, elimination of the need for water is of great environmental and economic significance. Specifically, the relative humidity of the feed gas (mixture gas) F1 may be less than 50%, not more than 30%, preferably not more than 5%. Also, the water vapor concentrations of the feed gas (mixture gas) F1 may be less than 30 mol%, preferably not more than 5 mol%.

The flow rates of the feed gas F1 are not particularly limited and are, for example, 2-1000 mL/minute per area 10 cm² of the CO₂ permselective membrane. The pressure of the feed gas is not particularly limited and may be atmospheric pressure or, for example, may be adjusted in a range of 100-10000 kPa or 100-1000 kPa.

The flow rates of the sweep gas S1 are not particularly limited and are, for example, 1-500 mL/minute per area 10 cm² of the CO₂ permselective membrane. The pressure of the sweep gas is not particularly limited and may be atmospheric pressure or less than atmospheric pressure or, for example, may be adjusted in a range of 30-5000 kPa or 30-1000 kPa. Such as in the case where CO₂ partial pressure in the feed gas is sufficiently high, sometimes, there is no need to necessarily pour the sweep gas.

The present invention is not limited to the above described embodiments and appropriate variations are possible within the range not departing from the spirit of the present invention. For example, optional layers may be laminated on one side or both sides of the CO₂ permselective membrane.

### EXAMPLES

Hereinafter, with giving Examples, the present invention is further specifically described. However, the present invention is not limited to these Examples.

### (Investigation 1)

As amino acid ionic liquids, tetrabutylphosphoniumglycine (hereinafter, referred to as "[P(C₄)₄][Gly]") and 1-ethyl-3-methylimidazoliumglycine (hereinafter, referred to as "[Emim][Gly]") were provided. These amino acid ionic liquids were prepared by a neutralization method. An aqueous solution containing 40 mass % of tetrabutylphosphonium hydroxide (hereinafter, referred to as "[P(C₄)₄][OH]") or an aqueous solution containing 50 mass % of 1-ethyl-3-methylimidazoliumglycine (hereinafter, referred to as "[Emim][OH]") was dropped to a glycine aqueous solution containing glycine in an amount of 5% more excessive than their mole number and 100 mL of pure water, while cooling to 8°C in nitrogen atmosphere. Then, by stirring not less than 24 hours, neutralization reaction between hydroxide ions and amino acid derived hydrogen ions was conducted. After the neutralization reaction, water was removed at 40°C by an evaporator. Water was removed until the amino acid ionic liquid to be prepared became a 90 mass % aqueous solution (water concentrations of 10 mass %). Porous membrane was impregnated with the amino acid ionic liquid by immersing hydrophilic polytetrafluoroethylene (PTFE) porous membrane (thickness of 35.7 µm, average pore diameter of 0.2 µm) in the amino acid ionic liquid prepared in this way and decompressing for 1800 seconds in the state. The porous membrane impregnated with the amino acid ionic liquid was retrieved and the redundant amino acid ionic liquid adhered to the surface was removed to obtain a permeable membrane for evaluation.

Likewise, a PTFE porous membrane was impregnated with 1-ethyl-3-methylimidazoliumbis(trifluoromethane)sulfonamide (hereinafter, referred to as "[Emim][Tf₂N]"), which was an ionic liquid, to obtain a permeable membrane for comparison.

Each permeable membrane provided was mounted to a permeation cell made from stainless steel. This permeation cell was accommodated in an oven to which thermostat was attached to provide an evaluation apparatus having a configuration similar to the apparatus shown in FIG. 1. By thermostat, the oven was adjusted to a predetermined temperature.

As a feed gas F1, a dried mixture gas (CO₂ partial pressure: 10 kPa) containing CO₂ gas and N₂ gas and substantially not containing water was used. The feed gas F1 was adjusted to a flow rate of 200 mL/minute and a temperature of 298K. Feed-side pressure was maintained at the atmospheric pressure. As a sweep gas S1, helium gas was used. The sweep gas S1 was adjusted to a flow rate of 40 mL/minute and a temperature of 298K. Sweep-side pressure was maintained at approximately atmospheric pressure. Sweep gas (expel gas) S2 of the outlet side was analyzed by gas chromatography (GC). From the analysis results of GC, the permeance of CO₂ and N₂ and CO₂/N₂ selectivity (= CO₂ permeance/N₂ permeance) were measured.

Evaluation results of the permeance and selectivity when a preset temperature of the oven was set to 363K or 373K were shown in Table 1.

**[Table 1]**

| | Temperature | [P(C₄)₄][Gly] | [Emim][Gly] | [Emim][Tf₂N] |
|---|---|---|---|---|
| CO₂ Permeance (mol/(m²·s·kPa)) | 363K | 2.99 × 10⁻⁵ | 4.96 × 10⁻⁵ | 2.34 × 10⁻⁵ |
| | 373K | 4.74 × 10⁻⁵ | 7.93 × 10⁻⁵ | 2.45 × 10⁻⁵ |
| CO₂/N₂ Selectivity | 363K | 37.0 | 112 | 9.04 |
| | 373K | 47.5 | 146 | 8.28 |

As shown in Table 1, the permeable membrane using [P(C₄)₄][Gly] or [Emim][Gly] which is an amino acid ionic liquid exhibited an excellent CO₂ permeance and CO₂/N₂ selectivity under dry conditions, compared to [Emim][Tf₂N].

### (Investigation 2)

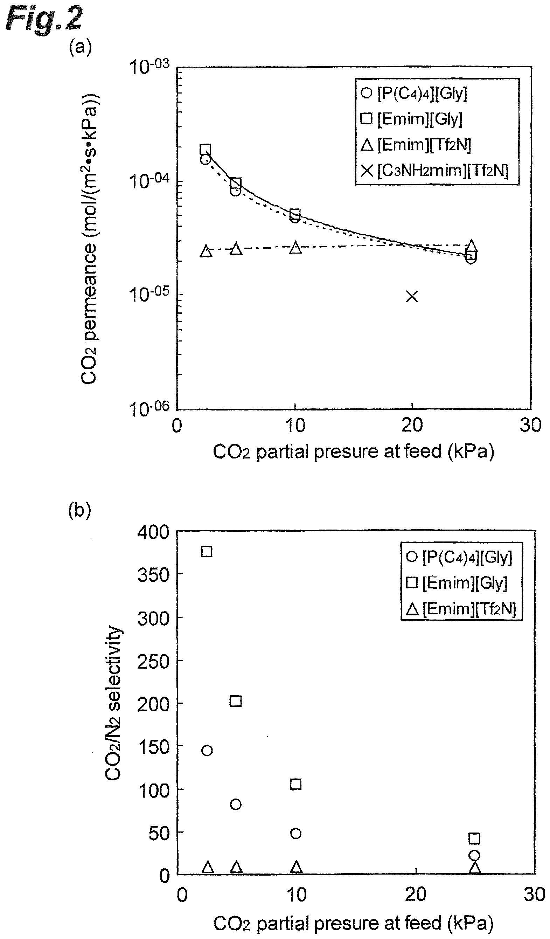

In a method similar to as in investigation 1, while changing a CO₂ partial pressure in a feed gas S1, the measurements of permeance of CO₂ and N₂ and CO₂/N₂ selectivity were conducted. (a) of FIG. 2 is a graph representing a relationship between the CO₂ permeance and CO₂ partial pressure, and (b) of FIG. 2 is a graph representing a relationship between the CO₂/N₂ selectivity and CO₂ partial pressure. In (a) of FIG. 2, together with the results of the present experiment, the value of CO₂ permeance of a permeable membrane using N-aminopropyl-3-methylimidazoliumbis(trifluoromethylsulfonyl)imide ([C₃NH₂min][Tf₂N]) which is another ionic liquid was cited from Non-Patent Literature 5 and shown for comparison.

As shown in FIG 2, permeable membrane using [P(C₄)₄][Gly] or [Emim][Gly], particularly in the region of a low CO₂ partial pressure, exhibited an excellent CO₂ permeance and CO₂/N₂ selectivity compared to [Emim][Tf₂N]. Also, it was indicated that under dry conditions, [P(C₄)₄][Gly] or [Emim][Gly] exhibited a much excellent CO₂ permeance compared to [C₃NH₂min][Tf₂N].

### (Investigation 3)

In a method similar to as in the investigation 1, while changing the concentrations of water vapor in the feed gas F1, the measurements of permeance of CO₂ and N₂ and CO₂/N₂ selectivity were conducted. CO₂ partial pressure of the feed gas was set to 2 kPa. The temperature of an oven heating a permeation cell was set to 373K. For the comparison, a permeable membrane (facilitated transportation membrane) using DL-2,3-diaminopropionic acid (DAPA) as CO₂ carrier were provided and this was evaluated together with permeable membranes of [P(C₄)₄][Gly], [Emim][Gly] and [Emim][Tf₂N].

A permeable membrane of DAPA was provided in the following procedure. Firstly, polyvinyl alcohol-polyacrylic acid copolymer (PVA/PAA copolymer), DAPA and CsOH were dissolved into water and stirred at 298K for 24 hours. The molar ratio of CsOH to DAPA was adjusted to 2. After stirring, minute bubbles were removed by centrifugation, followed by applying the solution to hydrophilic porous PTFE membrane. The applied solution was dried overnight at 298K. Finally, by heating at 393K for 2 hours to crosslink polymers, a permeable membrane of DAPA was obtained.

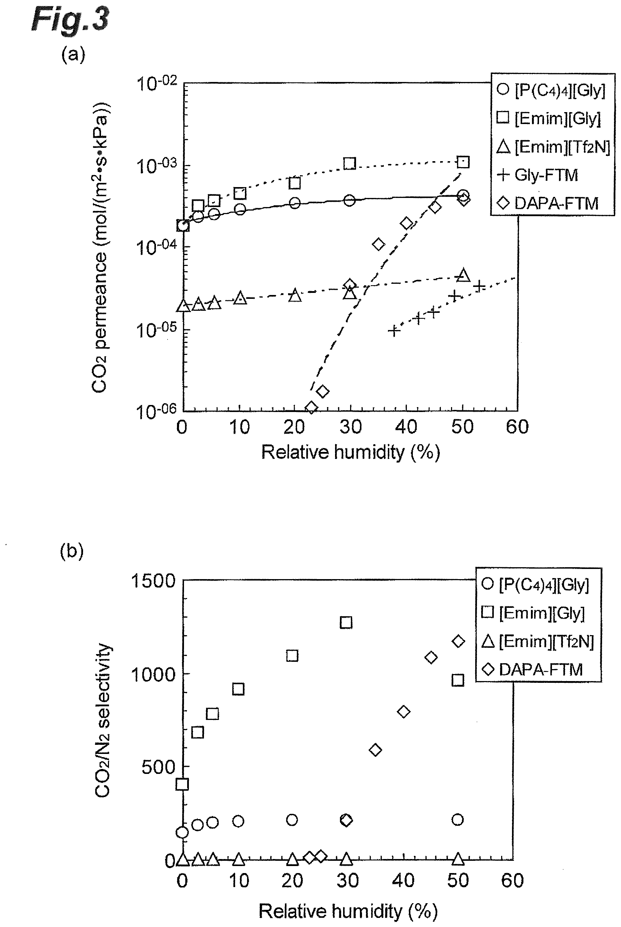

(a) of FIG. 3 is a graph representing a relationship between the CO₂ permeance and relative humidity in a feed gas, and (b) of FIG. 3 is a graph representing a relationship between the CO₂/N₂ selectivity and relative humidity in a feed gas. In (a) of FIG. 3, together with the results of the present experiment, the value of CO₂ permeance of a facilitated transportation membrane (Gly-FTM) using glycine was cited from Non-Patent Literature 2 and shown for comparison. The temperature of the permeation cell is 373K and the pressure of the feed gas is atmospheric pressure, and therefore, the value of relative humidity (%) in FIG. 3 can, as it is, be translated into a value of water vapor concentrations (mol%).

As shown in FIG. 3, the permeable membrane using [P(C₄)₄][Gly] or [Emim][Gly] exhibited a high CO₂ permeance and CO₂/N₂ selectivity, not only under dry conditions with a low steam concentrations but also under high humidity conditions. On the contrary to this, the facilitated transportation membrane of DAPA (DAPA-FTM) exhibited a relatively high CO₂ permeance and CO₂/N₂ selectivity under high humidity conditions; however, along with the decrease of relative humidity, CO₂ permeance and CO₂/N₂ selectivity were rapidly dropped. Gly-FTM is also in the similar tendency. Although [Emim][Tf₂N] exhibited a fairly high CO₂ permeance both under dry conditions and high humidity conditions, the CO₂/N₂ selectivity was generally low.

### (Investigation 4)

As amino acid ionic liquids, tetrabutylphosphoniumalanine (hereinafter, referred to as "[P(C₄)₄][Ala]") and tetrabutylphosphoniumserine (hereinafter, referred to as "[P(C₄)₄][Ser]") were provided. For these, in a method similar to as in investigation 1, together with [P(C₄)₄][Gly] and [Emim][Tf₂N], CO₂ permeance and CO₂/N₂ selectivity were evaluated.

**[Table 2]**

| | Tempera ture | [P(C₄)₄][Gly] | [P(C₄)₄][Ala] | [P(C₄)₄][Ser] | [Emim][Tf₂N ] |
|---|---|---|---|---|---|
| CO₂ Permeance (mol/(m²·s·kPa) ) | 90°C | 3.71 × 10⁻⁵ | 2.75 × 10⁻⁵ | 1.20 × 10⁻⁵ | 2.10 × 10⁻⁵ |
| CO₂/N₂ Selectivity | 90°C | 35.1 | 36.3 | 19.1 | 9.04 |

As shown in Table 2, [P(C₄)₄][Ala] and [P(C₄)₄][Ser] which are amino acid ionic liquids exhibited, in similar to [P(C₄)₄][Gly], a high CO₂ permeance and CO₂ selectivity under dry conditions. Although [Emim][Tf₂N] exhibited a good CO₂ permeance, its CO₂/N₂ selectivity was low.

### (Investigation 5)

As an amino acid ionic liquid, [P(C₄)₄][Gly] containing a predetermined amount of water was provided by a neutralization method. An aqueous solution containing 40 mass % of [P(C₄)₄][OH] was dropped to a glycine aqueous solution containing glycine in an amount of 5% more excessive than their mole number and pure water of 100 mL, while cooling to 8°C in nitrogen atmosphere. Then, by stirring not less than 24 hours, neutralization reaction between hydroxide ions and amino acid derived hydrogen ions was conducted. After the neutralization reaction, water was removed at 40°C by an evaporator. Water was removed until the concentrations of amino acid ionic liquid to be prepared became 100 mass %, 90 mass %, 80 mass %, or 50 mass % (water content is 0 mass %, 10 mass %, 20 mass % or 50 mass %). For amino acid ionic liquid prepared in this way, in a method similar to as in investigation 1, the CO₂ permeance and CO₂/N₂ selectivity were evaluated.

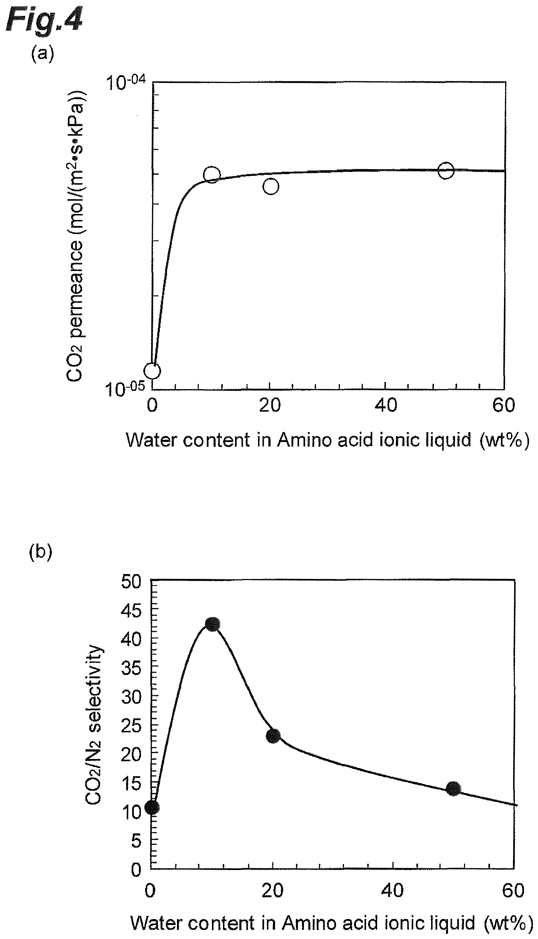

(a) of FIG. 4 is a graph representing a relationship between the CO₂ permeance and the amount of water contained in the amino acid ionic liquid. (b) of FIG. 4 is a graph representing a relationship between the CO₂/N₂ selectivity and the amount of water contained in the amino acid ionic liquid.

As shown in FIG. 4(a) and FIG. 4(b), [P(C₄)₄][Gly] which is an amino acid ionic liquid containing 20 mass % of water exhibited, in similar to [P(C₄)₄][Gly] containing 10 mass % of water, a high CO₂ permeance and CO₂ selectivity under dry conditions. In [P(C₄)₄][Gly] of water content 0 mass %, both of CO₂ permeance and CO₂ selectivity were low. On the other hand, [P(C₄)₄][Gly] in which the water content is 50 mass % exhibited a good CO₂ permeance, but its CO₂/N₂ selectivity was low.

### (Investigation 6)

As the amino acid ionic liquids, tetrabutylphosphonium glycin ([P(C₄)₄][Gly]), tetrabutylphosphonium N-methylglycin (hereinafter, referred to as [P(C₄)₄][mGly]), and tetrabutylphosphonium N,N-dimethylglycin (hereinafter, referred to as [P(C₄)₄][dmGly]) were provided. CO₂ permeance and CO₂/N₂ selectivity were evaluated for these amino acid ionic liquids while changing the oven set temperature by the same procedure as in Investigation 1.

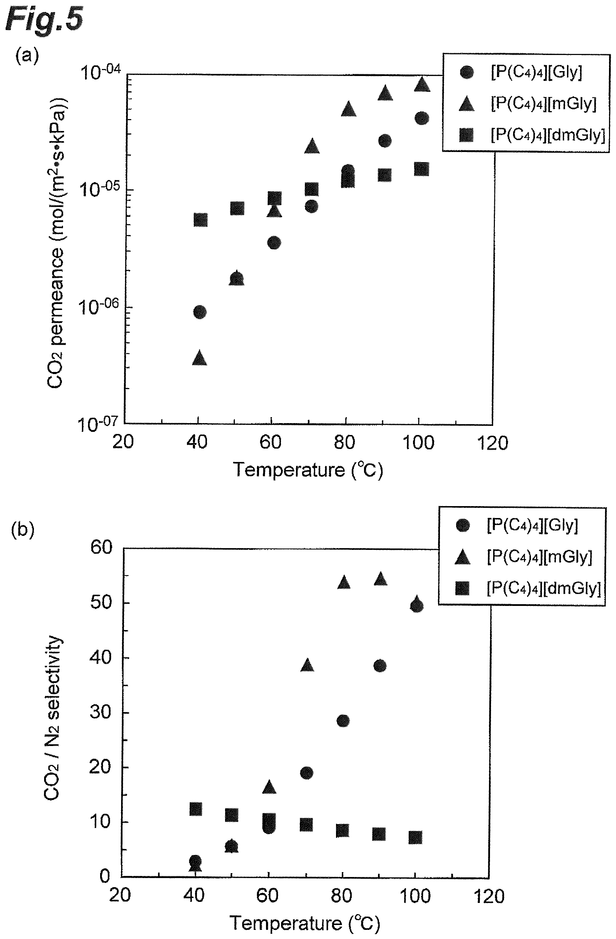

Figure 5 (a) is a graph showing the relation between the CO₂ permeance and the oven set temperature (temperature of the mixed gas and the separation permeation membrane). Figure 5 (b) is a graph showing the relation between the CO₂/N₂ selectivity and the oven set temperature (temperature of the separation permeation membrane).

As shown in Figure 5, the separation permeation membrane employing [P(C₄)₄][mGly] having a tertiary amino group exhibited the highest CO₂ permeance and CO₂/N₂ selectivity in the temperature range of 60°C or below. The separation permeation membrane employing [P(C₄)₄][Gly] having a primary amino group or [P(C₄)₄][mGly] having a secondary amino group exhibited higher CO₂/N₂ selectivity in the temperature range above 60°C. The separation permeation membrane employing [P(C₄)₄][mGly] having a secondary amino group exhibited higher CO₂ permeance than that employing [P(C₄)₄][Gly] having a primary amino group or [P(C₄)₄][mGly] having a tertiary amino group in the temperature range above 60°C and below 80°C.

### (Conclusion)

From the above experimental results, it is confirmed that, according to the present invention, a CO₂ permselective membrane capable of accomplishing a sufficiently high CO₂ permeance and CO₂/N₂ selectivity is provided. In addition, further excellent CO₂ permeance and CO₂/N₂ selectivity can be achieved by controlling the temperature, focusing on the type of amino groups in an amino acid.

### Industrial Applicability

A CO₂ permselective membrane in accordance with the present invention is sufficiently prospected for applications to air cleaning such as for residence space of building and space within vehicles and also to CO₂ removal from natural gases and the like.

### Reference Signs List

1: CO₂ permselective membrane, 3: permeation cell, 5: heating unit, 10: membrane separation apparatus, F1, F2: feed gas (mixed gas), S1, S2: sweep gas (expel gas).

## Claims

1. A CO₂ permselective membrane, comprising:
an amino acid ionic liquid and 3-50 mass % of water on the basis of the sum of the mass of the amino acid ionic liquid and the water; and
a porous membrane impregnated with the amino acid ionic liquid and the water.

2. The CO₂ permselective membrane according to claim 1 containing 5-20 mass % of water on the basis of the sum of the mass of amino acid ionic liquid and the water.

3. A method of separating CO₂ from a mixture gas, comprising a step of separating CO₂ from the mixture gas by passing CO₂ in a mixture gas containing CO₂ through the CO₂ permselective membrane according to claim 1 or 2.

4. The method according to Claim 3 wherein,
in the step of separating CO₂ from the mixed gas,
CO₂ in the mixed gas is allowed to permeate the CO₂ permselective membrane, while keeping the CO₂ permselective membrane and the mixed gas at a temperature of 60°C or below, when the number of the tertiary amino groups contained in the amino acid ionic liquid is larger than the total number of the primary amino groups and the secondary amino groups contained in the amino acid ionic liquid, and
CO₂ in the mixed gas is allowed to permeate the CO₂ permselective membrane, while keeping the CO₂ permselective membrane and the mixed gas at a temperature above 60°C, when the total number of the primary amino groups and the secondary amino groups contained in the amino acid ionic liquid is larger than or equal to the number of the tertiary amino groups contained in the amino acid ionic liquid.

5. The method according to Claim 4 wherein,
in the step of separating CO₂ from the mixed gas,
CO₂ in the mixed gas is allowed to permeate the CO₂ permselective membrane, while keeping the CO₂ permselective membrane and the mixed gas at a temperature above 60°C and below 80°C, when the total number of the primary amino groups and the secondary amino groups contained in the amino acid ionic liquid is larger than or equal to the number of the tertiary amino groups contained in the amino acid ionic liquid and the number of the secondary amino groups contained in the amino acid ionic liquid is larger than the number of the primary amino groups contained in the amino acid ionic liquid.

6. The method according to any one of Claims 3 to 5 wherein the step of separating CO₂ from the mixed gas comprises a part in which a relative humidity in the mixed gas is less than 50% or a steam concentration in the mixed gas is less than 30 mol%.

7. A membrane separation apparatus comprising the CO₂ permselective membrane according to claim 1 or 2.

## Patentansprüche

1. CO₂-permselektive Membran, umfassend:
eine ionische Aminosäure-Flüssigkeit und 3 bis 50 Massen-% Wasser, bezogen auf die Summe der Masse der ionischen Aminosäure-Flüssigkeit und des Wassers; und
eine poröse Membran, die mit der ionischen Aminosäure-Flüssigkeit und dem Wasser imprägniert ist.

2. CO₂-permselektive Membran gemäß Anspruch 1, enthaltend 5 bis 20 Massen-% Wasser, bezogen auf die Summe der Masse der ionischen Aminosäure-Flüssigkeit und des Wassers.

3. Verfahren zum Trennen von CO₂ von einem Mischgas, umfassend einen Schritt zum Trennen von CO₂ von dem Mischgas, indem CO₂ in einem CO₂-haltigen Mischgas durch die CO₂-permselektive Membran gemäß Anspruch 1 oder 2 geleitet wird.

4. Verfahren gemäß Anspruch 3, bei dem
im Schritt zum Trennen von CO₂ von dem Mischgas
CO₂ in dem Mischgas die CO₂-permselektive Membran durchdringen gelassen wird, während die CO₂-permselektive Membran und das Mischgas bei einer Temperatur von 60°C oder darunter gehalten werden, wenn die Anzahl der in der ionischen Aminosäure-Flüssigkeit enthaltenen tertiären Aminogruppen größer als die Gesamtzahl der primären Aminogruppen und der sekundären Aminogruppen, die in der ionischen Aminosäure-Flüssigkeit enthalten sind, ist, und
CO₂ in dem Mischgas die CO₂-permselektive Membran durchdringen gelassen wird, während die CO₂-permselektive Membran und das Mischgas bei einer Temperatur über 60°C gehalten werden, wenn die Gesamtzahl der primären Aminogruppen und der sekundären Aminogruppen, die in der ionischen Aminosäure-Flüssigkeit enthalten sind, größer oder gleich der Anzahl der in der ionischen Aminosäure-Flüssigkeit enthaltenen tertiären Aminogruppen ist.

5. Verfahren gemäß Anspruch 4, bei dem
im Schritt zum Trennen von CO₂ von dem Mischgas
CO₂ in dem Mischgas die CO₂-permselektive Membran durchdringen gelassen wird, während die CO₂-permselektive Membran und das Mischgas bei einer Temperatur über 60°C und unter 80°C gehalten werden, wenn die Gesamtzahl der primären Aminogruppen und der sekundären Aminogruppen, die in der ionischen Aminosäure-Flüssigkeit enthalten sind, größer oder gleich der Anzahl der in der ionischen Aminosäure-Flüssigkeit enthaltenen tertiären Aminogruppen ist und die Anzahl der in der ionischen Aminosäure-Flüssigkeit enthaltenen sekundären Aminogruppen größer als die Anzahl der in der ionischen Aminosäure-Flüssigkeit enthaltenen primären Aminogruppen ist.

6. Verfahren gemäß einem der Ansprüche 3 bis 5, bei dem der Schritt zum Trennen von CO₂ von dem Mischgas einen Teil umfasst, bei dem eine relative Feuchtigkeit in dem Mischgas weniger als 50% ist oder eine Dampfkonzentration in dem Mischgas geringer als 30 Mol-% ist.

7. Membrantrennvorrichtung, umfassend die CO₂-permselektive Membran gemäß Anspruch 1 oder 2.

## Revendications

1. Membrane sélectivement perméable au CO₂ comprenant :
un liquide ionique à base d'acides aminés et 3 à 50 % en masse d'eau sur la base de la somme de la masse du liquide ionique à base d'acides aminés et l'eau ; et
une membrane poreuse imprégnée avec le liquide ionique à base d'acides aminés et l'eau.

2. Membrane sélectivement perméable au CO₂ selon la revendication 1 contenant 5 à 20 % en masse d'eau sur la base de la somme de la masse de liquide ionique à base d'acides aminés et l'eau.

3. Procédé de séparation de CO₂ d'un gaz mixte comprenant une étape de séparation de CO₂ du gaz mixte par passage du CO₂ dans un gaz mixte contenant du CO₂ au travers de la membrane sélectivement perméable au CO₂ selon la revendication 1 ou 2.

4. Procédé selon la revendication 3, dans lequel
dans l'étape de séparation du CO₂ du gaz mixte,
du CO₂ dans le gaz mixte est autorisé à imprégner la membrane sélectivement perméable au CO₂, tout en maintenant la membrane sélectivement perméable au CO₂ et le gaz mixte à une température de 60 °C ou moins, lorsque le nombre de groupes d'acides aminés tertiaires contenus dans le liquide ionique à base d'acides aminés est supérieur au nombre total de groupes d'acides aminés primaires et de groupes d'acides aminés secondaires contenus dans le liquide ionique à base d'acides aminés, et
du CO₂ dans le gaz mixte est autorisé à imprégner la membrane sélectivement perméable au CO₂ tout en maintenant la membrane sélectivement perméable au CO₂ et le gaz mixte à une température supérieure à 60 °C, lorsque le nombre total de groupes d'acides aminés primaires et de groupes d'acides aminés secondaires contenus dans le liquide ionique à base d'acides aminés est supérieur à ou égal au nombre de groupes d'acides aminés tertiaires contenus dans le liquide ionique à base d'acides aminés.

5. Procédé selon la revendication 4, dans lequel
dans l'étape de séparation du CO₂ du gaz mixte,
du CO₂ dans le gaz mixte est autorisé à imprégner la membrane sélectivement perméable au CO₂, tout en maintenant la membrane sélectivement perméable au CO₂ et le gaz mixte à une température supérieure à 60 °C et inférieure à 80 °C, lorsque le nombre total de groupes d'acides aminés primaires et de groupes d'acides aminés secondaires contenus dans le liquide ionique à base d'acides aminés est supérieur à ou égal au nombre de groupes d'acides aminés tertiaires contenus dans le liquide ionique à base d'acides aminés et le nombre de groupes d'acides aminés secondaires contenus dans le liquide ionique à base d'acides aminés est supérieur au nombre de groupes d'acides aminés primaires contenus dans le liquide ionique à base d'acides aminés.

6. Procédé selon l'une quelconque des revendications 3 à 5, dans lequel l'étape de séparation de CO₂ du gaz mixte comprend une partie dans laquelle une humidité relative dans le gaz mixte est inférieure à 50 % ou une concentration de vapeur dans le gaz mixte est inférieure à 30 % en moles.

7. Appareil de séparation de membrane comprenant la membrane sélectivement perméable au CO₂ selon la revendication 1 ou 2.
